# EUROPEAN PATENT APPLICATION

(11) **EP 1 973 275 A1**
(43) Date of publication of application: **24.09.2008**
(21) Application number: 07251219.7
(22) Date of filing: 22.03.2007
(51) Int. Cl.: H04L 12/46

(54) **Data communications method and apparatus**

(71) Applicant: British Telecommunications Public Limited Company, London EC1A 7AJ (GB)
(72) Inventor: The designation of the inventor has not yet been filed
(74) Representative: Williamson, Simeon Paul

(57) **Abstract**

A method of communicating data between first 14 and second 22 devices on a network, the first device 14 being located within a first autonomous system 10 and the second device 22 being located in a respective second autonomous system 20 each of which has associated therewith an actual network layer protocol address. The method comprises generating a packet of data for transmission over the network and sending this to an egress router 19 of the first autonomous system. Then, at, or prior to, the egress router 19, translating the actual network layer protocol source address of the data packet into an external network layer protocol source address; storing within the first autonomous system translation information permitting a reverse translation from external network layer protocol source addresses to the corresponding actual network layer protocol source addresses; storing within the first autonomous system policy information specifying circumstances under which a received data packet having an external network layer protocol source address should have the address translated back into the corresponding actual network layer protocol source address; encapsulating the data packet within a second network layer protocol packet header including as a source address an ingress node to the first autonomous system; and forwarding on the data packet towards the second device 22.

## Description

### Field of the Invention

The present invention relates to a data communication method and apparatus. In particular, it relates to a method of transmitting data over an internetwork of plural data networks in which a layer 3 network layer protocol is used to transport data packets across the multiple networks. In such situations, it is possible to employ Multi-Protocol Label Switching (MPLS) techniques to increase the efficiency with which data packets can be transported over the internetwork.

### Background to the Invention

### MPLS

MPLS is an enhanced method of transmitting data packets (which in theory may be employing any internetworking layer 3 protocol for transport, although most often this is Internet Protocol (IP)) over multiple networks. MPLS has been standardised by the Internet Engineering Task Force (IETF) and is described in several Request For Comments (RFC) documents, but the main document describing the overall general architecture of MPLS as standardised is RFC 3031 the contents of which are hereby incorporated by reference.

In overview, MPLS has been developed because it was realised that (inter)networking protocols such as IP include much more information in their packet headers than is required simply for enabling a router to select the next hop for forwarding on a data packet. Furthermore, because IP (and many other layer 3 protocols) are routed by destination address, the algorithm for selecting the next hop is not quite as straightforward as simply making a lookup in a lookup table (for example, in IP in general a "longest match" lookup must be made). In MPLS each packet is assigned to a Forwarding Equivalence Class (FEC), a label is assigned to the FEC for each particular hop (or tunnelled hop, see below) and then at each hop a simple look up is made to determine the next hop and the appropriate outgoing label to place on the packet.

This gives rise to a number of advantages over a typical layer 3 protocol such as IP (which are set out in RFC 3031 and explicitly quoted at a later point in this document). Included in these advantages are that next hop selection is simpler than in IP, and that FEC selection (which need be made only at the ingress point to the MPLS network) can be based on more information than just that which is contained in the packet header (associated with the layer 3 protocol).

RFC 3031 also explains how MPLS may be used to perform a sort of hierarchical routing scheme which provides for "MPLS tunnels" to be set up such that routers (or Label Switching Routers (LSR's) as MPLS enabled routers are called in RFC 3031) which are not directly connected (i.e. via a layer 2 link layer protocol connection) can nonetheless appear as though they are connected by a lower level MPLS tunnel. This concept is described in RFC 3031 thus:
"3.27. Tunnels and Hierarchy
Sometimes a router Ru takes explicit action to cause a particular packet to be delivered to another router Rd, even though Ru and Rd are not consecutive routers on the hop-by-hop path for that packet, and Rd is not the packet's ultimate destination. For example, this may be done by encapsulating the packet inside a network layer packet whose destination address is the address of Rd itself. This creates a "tunnel" from Ru to Rd. We refer to any packet so handled as a "Tunneled Packet"."

In order to achieve this tunnelling, RFC 3031 describes how labels may be stacked in a label stack. In overview, this entails applying a new MPLS label to encapsulate the (already encapsulated) IP packet. The label stack behaves as a last-in first-out type stack and according to RFC 3031 only the top (i.e. last applied and their for outermost in terms of encapsulation) label is used for next hop selection, although if the next hop is the receiving router itself (as will be the case at the end of a tunnel, unless penultimate hop popping is used - this is discussed in greater detail below) then the next top label may be checked to determine the next hop (which could again be the same receiving router etc.). There is no theoretical limit to the level of stacking which can be performed.

### Internet Security

In recent years, there has been an ever increasing problem in terms of Internet Security. There are many ways in which people who wish to disrupt the normal operation of the Internet or particular users of the Internet may do so. Such people will hereinafter be referred to as attackers. One common form of attack is a Denial Of Service (DOS) attack.

In essence this involves an attacker sending traffic to a victim computer at a rate which overwhelms the resources of the victim computer so that the victim computer can no longer deal satisfactorily with legitimate requests from bona fide users. There are many ways in which this basic strategy may be "enhanced" by an attacker to increase the strength of the attack on the victim and to make it more difficult for the victim or a network operator to block the attack. One such method is a reflection attack in which the attacker sends multiple messages to legitimate other computers on the network which messages indicate that they have been sent by the victim rather than the attacker (so-called address "spoofing"). The legitimate computers then send messages back to the victim which can cause the victim computer to become overwhelmed. Another approach is to use malicious software to "infect" other innocent users' computers (which are then termed "zombies") which the attacker can then control to perform attacks on his/her behalf. These attacks involving multiple attacking computers acting in a co-ordinated way are referred to as Distributed Denial Of Service (DDOS attacks).

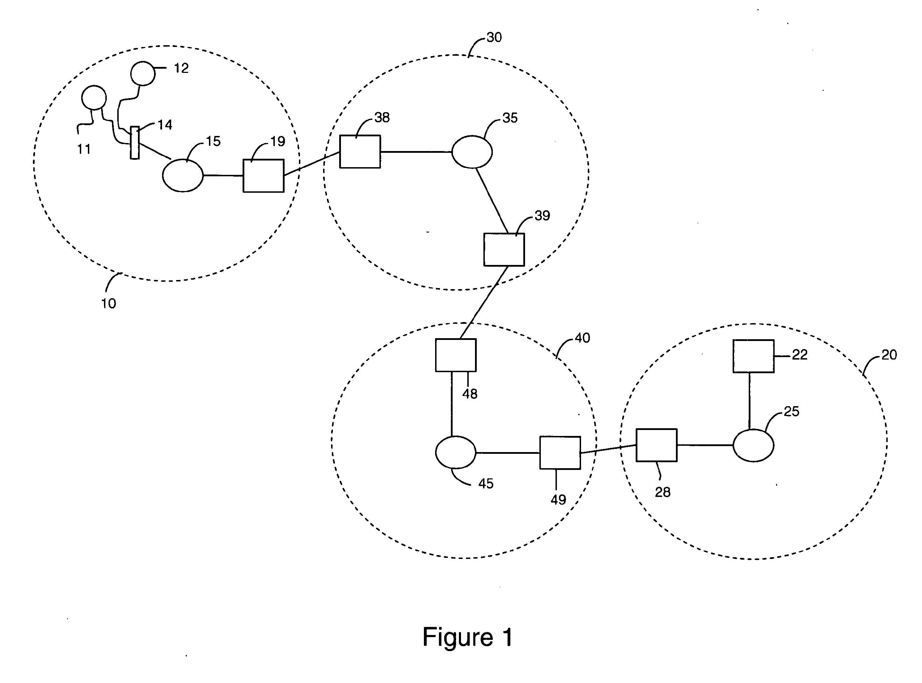

A paper by Mark Handley and Adam Greenhalgh of University College London, entitled "Steps Towards a DOS-resistant Internet Architecture" (Applications, Technologies, Architectures, and Protocols for Computer Communication, Proceedings of the ACM SIGCOMM workshop on Future directions in network architecture, Portland, Oregon, USA SESSION: New architectures, Pages: 49 - 56, Year of Publication: 2004, ISBN:1-58113-942-9) discusses these attacks in detail and also proposes an approach for mitigating these attacks. The proposals include path based addressing in which the conventional unique network layer address of a client computer (which is sending a message to a remote server) is replaced with a path-dependent return destination address which can only be used to send a return message back to the client computer along the same return path and from the same point in the network to which the user sent his/her original message. This is achieved by having each domain outside the client domain, en route to the destination domain, prepend a "local routing ID (indicating the next domain toward the client) to the source address." The paper further specifies that this path dependent return address may be encrypted by an intermediate domain prior to it prepending its local ID to the path dependent source address. As an example of this the paper describes how a domain (the third from the left in Figure 1) can encrypt the received path dependent source address BA of a received data packet (after the second domain from the left has added its own ID label "B" to the address to form "BA") to generate f(BA)prior to adding its own local ID C to generate a return path address of Cf(BA). The paper does not go into much detail about how the, inherently increased, amount of information required to specify a return path compared to simply specifying a return destination should be encoded into an IP packet, however it is suggested that IPv6 will probably be required to perform the implementation which suggests that the authors intended some additional new option fields (as provided for in IPv6) to be used for this purpose. Several advantages of this path dependent return address mechanism are mentioned in the paper, including that it makes "spoofing" impossible (at least for devices from another domain) (and therefore it makes "reflection attacks" correspondingly impossible for devices in a separate domain) and that it makes it much easier to perform "push-back" of filters.

### Summary of the Invention

According to a first aspect of the present invention, there is provided a method of communicating data between first and second devices on a network, the first device being located within a first autonomous system and the second device being located in a respective second autonomous system, the method comprising: generating a packet of data for transmission over the network and sending this to an egress router of the first autonomous system; adding a label identifying the first autonomous system; forwarding the packet through the network or internetwork, via zero, one or more intermediate autonomous systems and adding to the packet an additional zero, one or more labels identifying each respective intermediate autonomous system; receiving the packet including one or more autonomous system identifying labels at an ingress router to the second autonomous system; making the information about the autonomous system identifying labels available to one or more devices in the second autonomous system; and forwarding the packet to the second device.

This aspect of the present invention enables path information to be provided to an end device or another device acting on its behalf (e.g. a gateway device of some sort, for example to the entire autonomous system in which the end device is located). This may be useful for many purposes but it is especially useful in attempting to mitigate the effects of a Denial of Service (DoS) attack. This is because it enables an accurate filter in terms of the path taken by malicious traffic to be used to filter out the attack. Such a filter could either be placed fairly near to the end device (but only traffic coming along the path associated with the malicious attack would need to be filtered out) or the filter can be "pushed back" to much closer to the origin of the malicious traffic (filter "push-back" and the benefits thereof are discussed in the paper "Steps Towards a DoS-resistant Internet Architecture" referred to above).

The term "Autonomous System" (AS) is well known in the art and a full definition of the term is given in the IETF's RFC 1930. We use the term autonomous system roughly in accordance with this definition, and we are ambivalent as to whether the autonomous systems are public or private AS's except that in one currently preferred embodiment of the present invention, the identification label may comprise (i.e. constitute exclusively or include) the official public AS Number (ASN) assigned to it by the Internet Assigned Numbers Authority in which case the term autonomous system naturally refers only to public and not to private AS's since private AS's are unlikely to have a uniquely assigned ASN (since the private ASN's may be re-used since they are not exposed over the public Internet). The term "domain" is also often used to refer to an autonomous system and it is frequently used in this sense in the paper "Steps Towards a DoS-resistant Internet Architecture" referred to above.

The step of making the information about the autonomous system available to one or more devices is intended to include just about anything except for throwing away the information in every circumstance (as would typically be done by, say, an egress MPLS LSR which is the end point for one or more MPLS tunnels - where Penultimate Hop Popping is not in use).

Preferably, the method comprises generating a packet of data for transmission over the network and sending this to an ingress router of a label-switched network or internetwork, operating in accordance with a label-switched protocol, adding a label identifying the first autonomous system, classifying the packet to a forwarding equivalence class and adding a label indicative of that forwarding equivalence class to the packet, forwarding the packet through the network or internetwork, via zero, one or more intermediate autonomous systems and adding an additional zero, one or more labels to the packet identifying each respective intermediate autonomous system, making the information about the autonomous system identifying labels available to one or more devices and forwarding the packet to the second device via an egress label-switched router.

Preferably the label-switched protocol is MPLS as standardised by the IETF or a very similar protocol. Preferably the identifying labels are the same size as the labels used more generally in the label switched protocol for routing labelled packets through the network. The benefit of employing the present invention in this way is that the hardware which will be used to process the ID labels will be optimised for processing exactly this type of data structure and so can perform it very efficiently, and also very little modification will be required to a conventional MPLS enabled router device.

Instead of using identifying labels which include a unique identification associated with the autonomous system, a relative identification could be used instead in which the labels can only be uniquely associated with the respective autonomous system either by a particular one or more devices (e.g. the neighbouring LSR interfacing to the respective AS) or when considered in combination with the rest of the path information and/or destination address information.

Preferably the method further comprises disguising the IP address of the first device prior to sending the packet out of the first autonomous system.

This may be achieved in a number of different ways such as by using some sort of simple encryption (preferably a synchronous encryption mechanism) or a mapping system. If a mapping system is used, this is preferably a very simple arrangement in which serial numbers or some other group of suitable numbers (having the same length (i.e. 32 bits) as the IP address it is replacing) is assigned to IP source addresses in a manner which has no bearing on the source IP address that is being replaced (for example simply assigning the numbers in numerical order to IP addresses in the order in which messages are sent by the client devices, or on a pseudo-random basis) and then the selection is stored in a table such that either the actual IP address can be looked up to find the hidden/external address or the hidden/external address can be looked up to find the actual IP address stored in the table. A good choice for a group of serial numbers to use to replace the IP address would be the group of 32 bit numbers commencing with the binary digits 1111 corresponding to the IP address space reserved for "Experimental" purposes, since these are unlikely to be confused at any stage for genuine IP addresses.

According to a second aspect of the present invention, there is provided a method of transmitting (and receiving) packets of data from a first device in a first autonomous system to (or from) a second device in a second autonomous system using a network layer protocol, across a network, or inter-network of data networks, and/or point-to-point data connections, connecting the first and second autonomous systems together, the method comprising:
transmitting a data packet from the first device to an egress router of the first autonomous system; and
at, or prior to, the egress router:
   translating the actual network layer protocol source address of the data packet into an external network layer protocol source address (so as to hide the actual source network layer protocol address from devices outside the first autonomous system);
   storing within the first autonomous system translation information permitting a reverse translation from external network layer protocol source addresses to the corresponding actual network layer protocol source addresses;
   storing within the first autonomous system policy information specifying circumstances under which a received data packet having an external network layer protocol source address should have the address translated back into the corresponding actual network layer protocol source address;
   encapsulating the data packet within a second network layer protocol packet header including as a source address an ingress node to the first autonomous system; and
   forwarding on the data packet towards the second device.

The encapsulating step is intended to include adding an MPLS-like ID label as is done in the first aspect of the invention, as well as performing some sort of IP encapsulation as described in more detail further below.

Preferably, the method further comprises receiving a data packet at an ingress node of the first autonomous system having an inner data packet encapsulated therein which includes an external network layer protocol destination address, decapsulating the inner data packet, determining on the basis of the stored policy information whether or not to translate the external network layer protocol destination address of the inner packet into an actual network layer protocol destination address and, if the determination address is positive, performing the translation based on the stored translation information and then forwarding the inner packet on towards the destination.

The stored policy information may include information specifying which destinations a particular internal node has attempted to contact whereby a positive determination to translate the destination address of return inner packets can be made for data packets originating from a node for which the policy information indicates that a contact attempt has been made by the destination node. Alternatively or additionally, the stored policy information may include information specifying which kind of higher layer protocol messages (such as a TCP ACK (acknowledgement) signal) are acceptable and should therefore have their external address translated and then be onward forwarded. Furthermore, the policy information may further include one or more remote node addresses corresponding to "safe" nodes from which the autonomous system will always allow traffic such that messages from these should always have their external addresses translated and then be onward forwarded.

Preferably the first network layer protocol is Internet Protocol and the second network layer protocol is either a label switching protocol according to the first aspect of the present invention or Internet Protocol.

It will be apparent that this aspect of the present invention protects devices which are in an external autonomous system from seeing the actual network layer addresses of internal devices. In this respect it behaves a little like a Network Address Translation (NAT) device. However, rather than simply replacing the source address with the address of the NAT device, instead we translate the address and then encapsulate the packet. This means that with the second aspect of the present invention, far more devices can be routed to in the autonomous system than would be possible using a sort of NAT technique where all return packets have to be addressed to the network layer (i.e. IP) address of the NAT device and a record needs to be kept of which TCP ports are being used in order to keep track of different connections so that data is always forwarded to the correct internal device. Indeed the present invention could well be employed in combination with a NAT device having an actual network layer protocol address which is then converted to one or more internal private network addresses for devices on the private network side of the NAT device.

Preferably, the translation technique used is either a simple mapping or else a synchronous encryption technique, rather than an asynchronous public key / private key type encryption method since the only party which needs to perform both outward translation and return translation is the same autonomous system. In this respect the second aspect of the present invention is clearly distinguished from a technique such as IPsec in which a packet is encapsulated and the payload of the package (including the IP header which contains the source address) may be encrypted, since in this case, the encryption is done using an asynchronous style encryption precisely so that a first party may perform the encryption (at the source end) and a second party (at the destination end) may perform the decryption. Also note that in IPsec, the entire IP header is encrypted, including the destination IP address, so that the decapsulated packet could not be onward forwarded without first decrypting the encrypted header. In the technique of the present invention, only the source address of the IP packet header is modified so there is no difficulty in forwarding the packet on to the correct destination without any decryption being required. Furthermore, in IPsec there is no sense in which translation information enabling an external/hidden address to be translated back to an actual address. In IPsec on the outward journey some or all of the IP packet to be sent is encrypted using the public key of the receiving end of the IPsec tunnel (so that only the receiving end can translate the packet back), reply packets are addressed to the actual IP address of the client device and these are encypted (or partially encrypted) by the far end of the IPsec tunnel using the public key of the near end (now the receiving end) of the IPsec tunnel. This can be decrypted by the receiving end using its private key, but it is not translating back the same hidden/external address that it sent out in the first place.

A major advantage of the second aspect of the present invention over IPsec is that no-one, not even the ultimate recipient server being contacted, gets to know the actual network layer address of the client in our invention.

Furthermore, it is clear that this second aspect of the invention also differs significantly from what is described in the paper "Steps Towards a DoS-resistant Internet Architecture" referred to above, even though it describes "encrypting the client address before prepending the local ID in the client-to-server path, and decrypting it in the return path after removing the local ID", for the following reasons:
1. In the present invention, the translation step is performed at or prior to the egress router; that is to say, the translation is performed within the autonomous system of the client device. By contrast, the example given in Mark Handley, et al.s's paper shows that such encrypting would at the earliest be carried out in the first intermediate domain (i.e. when C receives a packet with source address BA, it encrypts BA and then adds C to form Cf(BA); correspondingly, B could encrypt source address A and then prepend it with B to form Bf(A), but Domain A cannot do this since it does not do any prepending itself other than to add A and prior to adding A there is nothing to encrypt).
2. In the present invention we store policy information specifying under what circumstances a received packet containing a hidden source address as the destination address will have it translated back to the actual source address. Since Mark Handley et al.'s paper achieves its results by use of the path-dependent source address, there is no need for this information to be stored, and instead any packet correctly received with some path information which is encrypted will simply be decrypted and the packet then forwarded on. There is no disclosure of selectively decrypting based on policy information.

### Brief Description of the Drawings

In order that the present invention may be better understood, embodiments thereof will now be described with reference to the accompanying drawings in which:
Figure 1 is a schematic overview of a data internetwork within which methods in accordance with the present invention may be employed;
Figure 2 is a flowchart showing the steps performed in transmitting an outbound packet from a client device in a first autonomous server to a server device in a second autonomous system, according to either a first or second embodiment of the present invention;
Figure 3 is a flowchart showing the steps performed in transmitting an inbound packet from the server to the client according to a first embodiment of the present invention; and

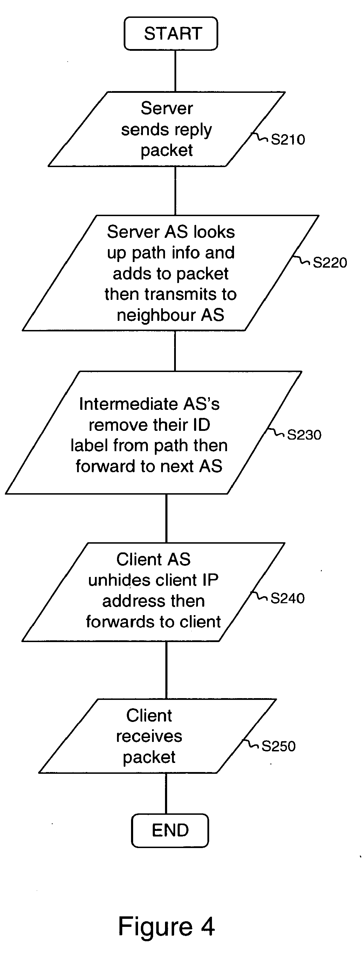

Figure 4 is a flowchart showing the steps performed in transmitting an inbound packet from the server to the client according to a second embodiment of the present invention.

### Detailed Description of Embodiments of the Invention

Figure 1 illustrates in a schematic overview an internetwork comprising four autonomous systems 10, 20, 30, 40 which interconnect a first device 14 acting as a client with a second device 22 acting as a server. The first autonomous system (hereinafter "AS") 10includes first and second home user computers 11, 12 connected over a private network to a router device 14 acting as a Network Address Translation (NAT) device, an access network 15 and an egress router 19. The second AS 20 includes a web server computer 22, an internal network 25 and an ingress router 28. The third AS 30 includes an internal network 35, an ingress/egress router 38 and an egress/ingress router 39. The fourth AS 40 includes an internal network 45, an ingress/egress router 48 and an egress/ingress router 49. It will be apparent that the terms ingress and egress are somewhat relative and the same router may operate as an ingress router when receiving incoming traffic from outside the respective AS and as an egress router when transmitting data out of the respective AS.

### First Embodiment

When one of the home PC's 11, 12 wants to set up a connection (e.g. an HTTP over TCP/IP connection) with web server 22, it issues a Transport Control Protocol (TCP) SYN request message directed to the public IP address of the web server 22 and including its own private network IP address as the source address. This is sent to the router device 14 which performs a network address translation and changes the private IP address of the respective home PC 11, 12 into its public IP address (as allocated to it by it's Internet Service Provider). The router device 14 then forwards on the IP packet encapsulating the TCP SYN request message (and as such becomes the "First device" for the purposes of the methods embodying the present invention) including its own actual public IP address as the source address contained in the IP packet header.

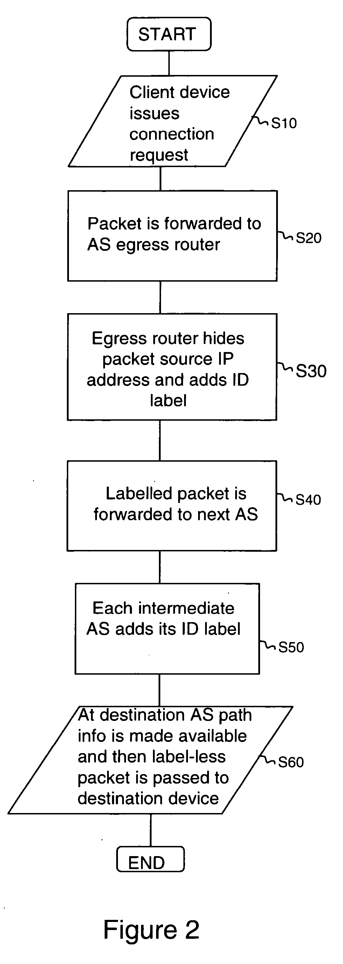

The above described steps constitute step S10 of Figure 2. Upon completion of step S10, the method proceeds to step S20 in which the IP packet is forwarded, via the access network 15 to the egress router 19. In the present embodiment, upon reaching the egress router 15, the egress router, at step S30, proceeds to hide the actual IP address of the first device14 (note that in the present embodiment in which a NAT device is being employed between the client device and the external IP network, the hidden IP address is that of the NAT device; however, in the case of a client device which is directly connected to the Internet with it's own external IP address, the actual IP address which is hidden would be that of the client device directly). In the present embodiment, hiding is done by means of a simple mapping from the actual IP address to some sort of serial number. Preferably the serial number contains the correct number of bits for an IP address but is obviously not a valid IP address belonging to the AS 10 (this could be achieved, for example, by ensuring that all of the serial numbers used are such that they never match with even the highest level of the network portion(s) of the IP addresses used by the AS 10). As an alternative, a form of encryption could be used based on a single shared key which is used to both encrypt and decrypt the IP address. Having hidden the IP address of the first device 14, the egress router 19 adds an MPLS-like label which identifies the AS10, in the present embodiment, uniquely (this is most conveniently achieved by inserting it's Internet Assigned Number Authority (IANA) assigned AS number into the label id portion of the MPLS-like label - note by MPLS-like, it is meant that the size of the various fields is the same as is used in MPLS and that the position in which they are appended to the IP packet which it encapsulates is the same as for MPLS even though it performs a somewhat different function to a standard MPLS label as is discussed below). This completes step S30.

The method then proceeds to step S40 in which the egress router 15 forwards the now ID labelled packet (including a hidden source IP address of the first device 14) out of AS 10 and to the ingress router 38 of intermediate AS 30. The packet is then forwarded through the internal network 35 to the egress router 39 which adds its own ID label in an MPLS-like label format including, in the present embodiment, a unique identifier of the AS 30, before forwarding the packet on to the ingress router 48 of the fourth AS 40. In the fourth AS 40 the packet is again forwarded through the internal network 45 to the egress router 49 which again adds its own ID label in an MPLS-like label format. Finally the egress router 45 forwards on the packet including MPLS-like ID labels for AS's 10, 30 and 40 to the ingress router 28 of the second (and destination) AS 20, thus completing step S50.

In step S60 the ingress router 28, instead of simply deleting the MPLS-like ID labels, makes this information available for subsequent use by the destination server computer 22, in case this happens to be useful. In the present embodiment this is achieved by simply storing the information in a database to which the destination device 22 has access (at least in order to look up path information about packets for which it was the destination). However, in an alternative embodiment, the information could also be made available to the server computer 22 simply by forwarding on the packet (based on the IP destination address contained in the IP packet header) together with the ID labels still appended thereto (note that each intermediate device within the internal network 25 through which the packet is forwarded is configured to ignore these ID labels (at least for the purposes of routing) regardless of whether they are MPLS enabled or not. The server device is then further configured to extract the path information from the ID labels appended to the received packet and to store this information in a local store in case it should need to refer to it again later. This completes step S60 and the method of transmitting outbound messages from a first device 14 in a first autonomous system 10 to a second device 22 in a second autonomous system 20.

Note that on this outward journey, the manner in which the packet is forwarded through the intermediate AS's 30 and 40 is irrelevant. However, some provision must be made to ensure that the autonomous systems do not attempt to use the ID labels for routing or label switching purposes. In the present embodiment, the routers are "peering" with each other which means they behave as a single MPLS domain. Thus a mechanism is provided for ensuring that the ID labels are not mistaken for classic MPLS switching labels, and the switching labels are then appended in the normal way around the ID labels. Such a mechanism could simply be that the ID labels are recognised and reserved for such usage only, or else some sort of special buffer MPLS-like label should be inserted around the ID labels for this purpose (e.g. using one of the reserved but currently unassigned label values specified in the IETF's RFC 3032 (the contents of which are hereby incorporated by reference)). Having taken this precaution, normal MPLS switching labels can then be used to label switch the packet through the entire internetwork to the destination AS.

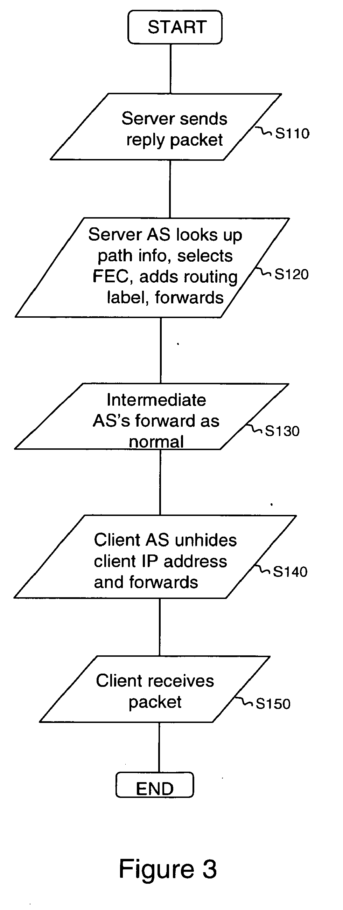

Similarly, on the return journey (which is now described with reference to Figure 3, when the web server 22 wishes to send a return message (e.g. a SYN ACK TCP message), it generates a normal IP packet including as the destination address the external address (i.e. the translated address) of the first device 14 (stepS110). In the present embodiment, this is then forwarded on via the internal network 25 to the ingress router 28 (now acting as an egress router), which looks up the external IP address to identify the path data which it has stored in respect of this external IP address. In alternative embodiments, the server could access the path information itself prior to forwarding the packet towards the egress router 28 and add this information itself to the packet for example in the form of one or more ID labels; this is naturally the case for embodiments where the egress router 28 has not locally stored the path information, but instead simply forwarded it on to the web server 22.

From the path information, egress router 28 is able to identify the destination AS as AS 10, and from this information, it is able to assign the packet to a particular Forwarding Equivalence Class (FEC). On this basis, in accordance with standard MPLS, the egress router assigns an MPLS label to the packet which controls the subsequent forwarding of the packet back through the intermediate AS's until it reaches the destination AS 10 (Step S120). Since in this embodiment, all of the intermediate AS's are MPLS peers, they behave as a single MPLS domain and the packet is forwarded through all of the AS's based on the original MPLS label assigned to the packet by the egress router 28 (or alternatively some other MPLS router within AS 20) (step S130).

When the packet reaches the destination AS 10 (associated with the client device 14), the destination AS 10 examines the IP destination address and determines that it is an external or hidden IP address. It therefore consults its policy store to ascertain whether or not this is a packet which should have its address translated and then be onwardly forwarded, or whether the packet should be dropped. In the present embodiment, the policy store contains details of outgoing connection attempts made by each client device in its AS amongst other things (such as trusted destinations whose traffic is always allowed and information about higher layer protocols (especially TCP) and message types which are also allowed under certain circumstances etc.), and will allow packets originating from addresses to which it has noted that the respective client has tried to make a connection itself (i.e.to allow reply messages from devices where the client has initiated the connection).

In the present example, the ingress router 19 determines that the message is a reply from one sent earlier by the first device 14 and therefore performs the reverse translation back to the actual IP address of the first device 14 and then forwards on the packet in the normal manner (all ID labels having been stripped off at this point) (step S140). Finally, at step S150 the client receives the return IP packet containing the SYN ACK message from the web server 22 and the method ends. This process can be repeated for the entire duration of the TCP connection between the first device 14 and the web server 22.

### Second Embodiment

In a second embodiment, the AS's 10, 20, 30, 40 are not MPLS peers and so it is not possible to transmit the package whilst keeping it entirely in the MPLS domain using standard MPLS techniques. Accordingly in this embodiment, the path information associated with the packet sent in the client to server direction is used to help route the packet back to the client AS 10. In the present embodiment this is achieved by appending the ID labels to the return packet and using these. In the present embodiment, therefore, when the web server 22 sends a return packet (step S210) this is forwarded to the egress router which looks up the stored path info for the corresponding received packet (again in alternative embodiments, this could be performed by the server 22 itself where it has this information) and then forwards the packet to its neighbouring AS for onward routing (step S220). (Note that where the ID is unique, only the ID label of the destination AS need be included and the packet can be routed based on this ID label alone; in embodiments where the ID's have only local significance, then the entire path set of labels needs to be included so that the final destination can be determined by tracing back through the path).

In this second embodiment, the entire path information is added (regardless of whether the ID's are unique or locally significant only) in the form of separate ID labels for each intermediate AS along the path and then each intermediate AS removes their own ID from the path info as the packet traverses the AS (generally either at the ingress or at the egress of the AS) (step S230).

When the packet arrives at the destination AS in step S240, the receiving ingress router 19 removes its own label from the path information (thus stripping off the final remaining MPLS like label), checks that it is a packet which should be forwarded and then translates the destination address back from the external, hidden version into the actual IP address of the first device (in the same way as in step S140 of the first embodiment described above) and then it forwards the packet with the actual destination IP address to the first device (again as in step S140 of the first embodiment).

Finally, in step S250, the packet is received by the first device (14) (which in the present embodiment performs conventional Network Address Translation and then forwards the packet on to the respective one of the home user devices 11, 12 which initiated the connection in the first place.

It should be note that in the second embodiment, there is still a certain amount of coordination required between the AS's in order to transport the packets back and forth through the internetwork as a whole. However, the amount of co-operation is much less than if they are full MPLS peers since there is effectively only a single "Forwarding Equivalent Class" for any packets which are to be transmitted from one AS to another, thus very little interaction is required and no information about the internal workings of one AS need be disclosed to another. Nonetheless, in common with conventional MPLS, the switching of data packets through the intermediate AS's (and especially from one AS to another) can be achieved very quickly and efficiently.

### Variations

It will be appreciated that the first and second aspects of the invention (i.e. adding ID labels to a packet on its route from a first device (usually a client) to a second device (usually a server); and hiding the actual network layer source address of packets sent by a first device (especially client devices) from devices (of any type) located outside of the AS) are most beneficially used together in order to provide an architecture which is strongly resistant to DoS attacks (since using both of these makes it easy to filter out traffic from individual malicious users and makes it harder for malicious users to compromise client devices for use as part of a "zombie army", since individual client addresses will not be known or discoverable by devices located outside the local AS - again see "Steps toward a DoS-resistant Internet Architecture" referenced above). Furthermore, there is a special synergy between the two separate aspects, since the MPLS-like ID labels provide an excellent mechanism by which a packet may be returned to a connection initiator even though the actual address to which the packet should be returned is not known to the sender.

Nonetheless, it will be apparent that each aspect of the present invention could also be used in isolation. Thus the first aspect is still useful for enabling filter push-back even if the source IP (or other network layer) address is not hidden. Similarly, the hiding the source network layer address is still useful (e.g. to make the compromising of client devices more difficult) even if some other mechanism is used to enable packets to be returned to the connection initiator. There thus follows below a brief explanation of how IP packet encapsulation could be used as an alternative mechanism for enabling packets destined to a client device whose actual IP address has been hidden from the server device to which the client device has initiated a connection.

### IP Packet encapsulation

In this variation (which may be applied to either of the above described first and second embodiments) instead of applying an MPLS-like ID label at an ingress Label Switched Router (LSR) at the entrance of an MPLS network as in the first embodiment, the client device (or the NAT module if the client device happens to be sitting behind a NAT module) forwards the IP packet (containing its actual IP address in the IP header) to a gateway device to which all traffic which is bound for outside of the AS is forwarded (if the AS is very large, then more than one such gateway device may be required to handle the amount of inter-AS traffic - in such a case a good solution is to distribute the gateway functionality across multiple separate devices but in such a way that they behave as a single entity by ensuring that they all have access to the same data, which may also be stored over multiple devices in a distributed manner). At the gateway device, the actual layer 3 source address (in this case an IP address) is hidden (either by a simple mapping to a random IP address, or by use of a symmetrical encryption mechanism) and then the IP packet including an IP packet header, which is unchanged except for the substitution of the actual source IP address with an external version, is encapsulated by the gateway within a new IP packet header which includes its own actual IP address as the source network layer address and the actual IP address of a corresponding gateway device located at the destination AS. In the event that the source AS does not know the IP address of the destination, it can send a message requesting this information to the destination IP address (i.e. the target web server device) contained in the original packet to be sent. This message can either be transmitted right through to the destination device (i.e. server), which, provided it understands the message and knows the IP address of its local gateway, can respond appropriately, or else the message might be intercepted by the remote gateway and answered directly.

Having found (if not already known) a counterpart gateway within the destination AS, the original packet (but with the modified source network layer address) is encapsulated within a new IP packet header having the actual IP address of the gateway device (associated with the client device) in the source IP address field and the actual IP address of the counterpart gateway device in the destination AS (i.e. the web server's local gateway) in the destination IP address field. The packet is then forwarded by normal mechanisms over any intermediate AS's until it reaches the gateway device of the destination AS. At this point the destination gateway decapsulates the original IP packet (but with the hidden source address), saves details of the hidden/external source IP address (and the respective corresponding gateway device (of the client device which sent the encapsulated packet) and forwards the packet on to the destination device.

When the destination device (i.e. the server) wishes to send a reply it simply formulates a reply IP packet in the normal way including the hidden/external IP address (of the client) as the destination address and then forwards this on to its local gateway device for forwarding beyond the local AS. On receipt of the packet, the (web server's) gateway checks to see if it has a record of the corresponding gateway device for the received packet (which it does since it stored this information on receipt of the original packet) and then encapsulates the reply IP packet into a new IP packet including the actual address of the gateway device at the AS of the client device. The packet is then forwarded via normal mechanisms to the gateway in the AS of the client device which decapsulates the inner IP packet, checks that the received message complies with its policies and then translates/maps the actual IP address of the client device back into the inner IP packet in place of the hidden/external IP address and forwards it on back to the client device.

An alternative and preferred mechanism for performing IP encapsulation instead of using the MPLS-like ID labels, is similar to the above except that instead of finding a corresponding gateway device at the far end of a connection, the encapsulating IP packet header simply specifies the same destination device as included in the inner packet (i.e. the public network address of the server). This encapsulated packet can then either be delivered all of the way to the destination server (which can then send a reply packet having an inner packet addressed to the external address of the client and an outer packet addressed to the actual network address of the egress/ingress router of the first autonomous system which performed the encapsulation process in the first place and can then perform the reverse translation to find the actual network address of the client) or it can be intercepted by an ingress router to the autonomous system of the server computer which can then store details about the external/hidden source address and the actual network address of the egress router which performed the encapsulation.

## Claims

1. A method of transmitting packets of data from a first device in a first autonomous system to a second device in a second autonomous system using a network layer protocol, across a network, or inter-network of data networks, and/or point-to-point data connections, connecting the first and second autonomous systems together, the method comprising:
transmitting a data packet from the first device to an egress router or gateway of the first autonomous system;
at, or prior to, the egress router or gateway, translating the actual network layer protocol source address of the data packet into an external network layer protocol source address;
storing within the first autonomous system translation information permitting a reverse translation from external network layer protocol source addresses to the corresponding actual network layer protocol source addresses;
storing within the first autonomous system policy information specifying circumstances under which a received data packet having an external network layer protocol source address should have the address translated back into the corresponding actual network layer protocol source address;
encapsulating the data packet within a second network layer protocol packet header including as a source address an ingress node to the first autonomous system; and
forwarding on the data packet towards the second device.

2. A method as claimed in claim 1 further comprising:
receiving a data packet at an ingress node of the first autonomous system having an inner data packet encapsulated therein which includes an external network layer protocol destination address;
decapsulating the inner data packet;
determining on the basis of the stored policy information whether or not to translate the external network layer protocol destination address of the inner packet into an actual network layer protocol destination address; and, if the determination address is positive,
performing the translation based on the stored translation information; and then
forwarding the inner packet on towards the destination.

3. A method according to either one of the preceding claims wherein the stored policy information includes information specifying which destinations a particular internal node has attempted to contact or for which a transport layer connection is ongoing whereby a positive determination to translate the destination address of return inner packets is made for data packets originating from a node for which the policy information indicates that a contact attempt has been made by, or a transport layer connection is ongoing with, the destination node.

4. A method according to any one of the preceding claims wherein the translation information comprises a mapping data structure storing the actual address in correlation with the respective external address whereby the mapping data structure may be efficiently searched either to find the actual address based on the external address or vice-versa.

5. A method according to any one of the preceding claims wherein the encapsulating step comprises encapsulating the data packet within an Internet Protocol header including as a source address the actual IP address of an ingress router to the first autonomous system and as the destination address the destination address contained in the data packet.

6. A data network or internetwork including a first device having an actual network layer protocol address and being located within a first autonomous system, a second device having an actual network layer protocol address and being located in a respective second autonomous system and an egress router of the first autonomous system, the first device including means for generating and transmitting a packet of data for transmission over the network or internetwork to the second device; the network or internetwork including, within the first autonomous system:
means for sending the data packet to the egress router of the first autonomous system,
translation means for translating the actual network layer protocol source address of the data packet into an external network layer protocol source address;
storage means storing within the first autonomous system translation information permitting a reverse translation from external network layer protocol source address to the corresponding actual network layer protocol source address of the first device;
storage means storing within the first autonomous system policy information specifying circumstances under which a received data packet having an external network layer protocol source address should have the address translated back into the corresponding actual network layer protocol source address; and
encapsulation means for encapsulating the data packet within a second network layer protocol packet header including as a source address an ingress node to the first autonomous system and forwarding on the encapsulated data packet out of the first autonomous sytem towards the second device.

7. A data network or internetwork according to claim 6 wherein the encapsulation means is further operable to include as a destination address of the second network layer protocol header the actual network layer protocol address of the second device.

8. A computer program or a suite of computer programs for carrying out the method of any one claims 1 to 5 during execution of the program or programs.

9. Carrier means carrying the computer program of claim 8.

10. Tangible data storage means carrying the computer program or programs of claim 8.
